# EUROPÄISCHE PATENTSCHRIFT

(11) **EP 1 064 787 B1**
(45) Veröffentlichungstag und Bekanntmachung des Hinweises auf die Patenterteilung: **17.07.2002**
(21) Anmeldenummer: 99919042.4
(22) Anmeldetag: 08.03.1999
(51) Int. Cl.: H04N 7/14

(54) **MULTIMEDIALES KOMMUNIKATIONSENDGERÄT**
MULTIMEDIA COMMUNICATION TERMINAL
TERMINAL DE COMMUNICATION MULTIMEDIA

(30) Priorität: 16.03.1998 DE 19811358
(43) Veröffentlichungstag der Anmeldung: 03.01.2001
(73) Patentinhaber: Wincor Nixdorf GmbH & Co KG, 33106 Paderborn (DE)
(72) Erfinder: KRUSE, Bernd, D-33184 Altenbeken (DE); LUTZ, Bernhard, D-33129 Delbrück (DE); TEWES, Udo, D-32547 Bad Oeynhausen (DE); URBAN, Uwe, D-33102 Paderborn (DE)
(86) Internationale Anmeldenummer: DE9900616
(87) Internationale Veröffentlichungsnummer: WO9948294

(56) Entgegenhaltungen:
- EP-A- 0 683 613
- EP-A- 0 773 686
- DE-A- 4 236 665
- DE-A- 4 323 336
- US-A- 4 856 045
- US-A- 4 888 795

## Beschreibung

Die Erfindung betrifft ein multimediales Kommunikationsendgerät nach dem Oberbegriff des Anspruchs 1.

War bisher das Telefon das weitestverbreitete Kommunikationsmittel, kommen insbesondere seit Einführung des ISDN-Netzes multimediale Kommunikationsmittel mehr und mehr in Gebrauch. Dazu sind multimediale Kommunikationsendgeräte erforderlich, mit denen nicht nur Sprache sondern auch Bilder erfaßt und wiedergegeben werden können. Besondere Anforderungen werden an die Ergonomie eines multimedialen Kommunikationsendgerätes vor allem in öffentlichen Kommunikationseinrichtungen wie z.B. in Fernsprechkabinen gestellt. Solche Einrichtungen werden von Personen mit sehr unterschiedlicher Körpergröße benutzt. Sie alle sollen aber von der Videokamera erfaßbar sein und bequem das Sichtgerät beobachten können. Dies ist in einer engen Fernsprechkabine besonders schwierig, in der der Benutzer dicht vor dem Kommunikationsendgerät steht.

Multimediale Kommunikationsendgeräte der genannten Art, die den oben genannten Anforderungen genügen, sind aus der US 4 856 045 und der DE 42 36 665 A1 bekannt. Beide Geräte haben ein zugleich als Standfuß dienendes Basisgehäuse, an dem ein bewegliches Gehäuse über einen Ausleger befestigt ist. Das bewegliche Gehäuse ist um eine parallel zu der Vorderkante des Basisgehäuses verlaufende Welle schwenkbar an dem Basisgehäuse gelagert. Das bewegliche Gehäuse trägt sowohl das Sichtgerät als auch die Videokamera, so daß diese Funktionselemente durch Schwenken des beweglichen Gehäuses bequem der Körpergröße eines Benutzers angepaßt werden können.

Die Zusammenfassung der Videokamera und des Sichtgerätes in einem beweglichen Gehäuse hat jedoch Nachteile, die besonders dann zum Tragen kommen, wenn das Sichtgerät mit einer berührungsempfindlichen Oberfläche als sogenannter Touch Screen ausgebildet ist. Bei dessen Berührung mit dem Finger sind Vibrationen des beweglichen Gehäuses unvermeidbar, die sich zwangsläufig auf die Videokamera übertragen. Diese führen aber auf der Empfängerseite einer Kommunikationsverbindung zum Zittern des Videobildes.

Aufgabe der Erfindung ist es, ein multimediales Kommunikationsendgerät vorzuschlagen, das mit den für öffentliche Kommunikationseinrichtungen erforderlichen Funktionselementen ausgestattet ist und bei dem die Videokamera vibrationsmäßig von dem Sichtgerät entkoppelt ist.

Diese Aufgabe wird durch die Merkmale des Anspruchs 1 gelöst.

Dabei ist das Sichtgerät in eine vordere Fläche des Gehäuses eingebaut und in das Kommunikationsendgerät ist oberhalb des Sichtgerätes eine Hohlkehle für die Aufnahme wenigstens eines vollzylindrischen oder zumindest im Bereich der Hohlkehle zylindrischen Körpers eingeformt. In den voll- bzw. teilzylindrischen Körper ist die Videokamera eingebaut und an diesen eine Ablage für den Fernsprech-Handapparat angeformt. Zusätzlich zu der Ablage kann in den voll- bzw. teilzylindrischen Körper noch ein Kartenleser für Kredit- oder Telefonkarten -dabei kann es sich um Chip- oder Magnetstreifenkarten oder um eine Kombination aus beiden handeln- eingebaut sein.

Damit ist das multimediale Kommunikationsendgerät mit allen für die akustische und bildliche Kommunikation oder auch zusätzlich eine bargeldlose Bezahlung der in Anspruch genommenen Kommunikationsdienste erforderlichen Funktionselementen ausgestattet, die in öffentlichen Kommunikationseinrichtungen benötigt werden. Die Anordnung des Sichtgerätes und der Videokamera in getrennten Gehäuseteilen hat den Vorteil einer erschütterungsmäßigen Entkoppelung beider. Die Erschütterungssicherheit wird noch durch den kompakten Aufbau des Kommunikationsendgerätes gefördert, da auf irgendwelche Ausleger zur Verbindung zwischen dem Gehäuse und dem voll- bzw. teilzylindrischen Körper, welche zusammen ein mechanisch schwingfähiges System bilden würden, verzichtet wird. Trotzdem sind die Videokamera und das Sichtgerät relativ zueinander verstellbar. Dazu ist der voll- bzw. teilzylindrische Körper um seine mit der Achse der Hohlkehle zusammenfallende Längsachse drehbar in der Hohlkehle gelagert.

In einer Weiterbildung der Erfindung steht der voll- bzw. teilzylindrische Körper zumindest auf einer Seite über das Gehäuse über und an den Überstand ist die Ablage für den Handapparat angeformt oder in ihn ist der Kartenleser eingebaut. Dies hat den Vorteil, daß die Anschlußleitung des Handapparates neben dem Gehäuse frei herunterhängen kann. Gleiches gilt für eine an der Telefonkarte angebrachte Kette oder einen Riemen -besonders junge Leute sichern ihre Telefonkarte häufig auf diese Weise gegen Verlust-. Darüber hinaus kann bei einem kostenfreien Einsatz des multimedialen Kommunikationsendgerätes, etwa im privaten Bereich oder bei einer Verwendung als Servicetelefon, ganz auf den Kartenleser und damit auf einen diesen beherbergenden Überstand verzichtet werden. Dies ist besonders einfach bei einem weiter unten noch ausführlich beschriebenen modularen Aufbau des voll- bzw. teilzylindrischen Körpers aus einem mittleren Teilkörper, einem linken Überstand und/oder einem rechten Überstand möglich. Es kann dann einfach der den Kartenleser beherbergende Überstand fortgelassen werden. Es versteht sich von selbst, daß in die Ablage für den Handapparat auch ein Gabelumschalter eingebaut ist.

Vorzugsweise steht der voll- bzw. teilzylindrische Körper auf beiden Seiten über das Gehäuse über, wobei in den einen Überstand der Kartenleser eingebaut und an den anderen Überstand die Ablage angeformt ist. In einem mittleren, über dem Sichtgerät befindlichen Bereich des vollbzw. teilzylindrischen Körpers ist dann genügend Raum für den Einbau wenigstens eines Lautsprechers, der Videokamera, eines Mikrofons für eine sogenannte Freisprechfunktion und eine Anzeigeeinrichtung für den Status des Kommunikationsendgerätes.

In Weiterbildung des vorstehend genannten Merkmals sind in den mittleren Teilkörper des voll- bzw. teilzylindrischen Körpers zwei die Basis eines Stereowiedergabesystems bildende Lautsprecher eingebaut und wenigstens die Videokamera ist zwischen diesen angeordnet. Durch die unbewußte gehörrichtige Aufstellung eines Benutzers vor dem Kommunikationsendgerät ergibt sich quasi von selbst seine positionsrichtige Ausrichtung zur Videokamera.

In einer bevorzugten Weiterbildung des erfindungsgemäßen Kommunikationsendgerätes ist der voll- bzw. teilzylindrische Körper in wenigstens zwei axial nebeneinander angeordnete Teilkörper unterteilt, die unabhängig voneinander um eine ihnen gemeinsame Längsachse drehbar sind. Vorzugsweise wird die Unterteilung dabei so vorgenommen, daß der voll- bzw. teilzylindrische Körper in einen den mittlerer Bereich bildenden mittleren Teilkörper, einen linken Überstand und einen rechten Überstand unterteilt ist. Dadurch sind wenigstens das Sichtgerät, die Videokamera, die Ablage für den Handapparat und der Kartenleser entsprechend den Notwendigkeiten bei einer Wandbefestigung oder Tischaufstellung des Kommunikationsendgerätes und entsprechend der Körpergröße eines Benutzers frei zueinander einstellbar.

Um dem Benutzer die höhenrichtige Einstellung der Videokamera relativ zu seiner Körpergröße zu ermöglichen, ist in einer bevorzugten Weiterbildung der Erfindung an wenigstens einer Stirnseite des voll- bzw. teilzylindrischen Körpers ein Handrad angeordnet, welches mit dem mittleren Teilkörper derart drehverbunden ist, daß durch Drehung des Handrades der mittlere Teilkörper relativ zum linken Überstand, zum rechten Überstand und zum Gehäuse drehbar ist.

Da die Ablage für den Handapparat und der Kartenleser entsprechend den ergonomischen Anforderungen bei einer Wandbefestigung oder Tischaufstellung des Kommunikationsendgerätes nur einmal eingestellt werden muß, ist der linke und/oder der rechte Überstand relativ zum Gehäuse und dem mittleren Teilkörper drehbar und in der eingestellten Position derart fixierbar, daß er aus dieser von außerhalb des Gehäuses nicht verstellbar ist.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert. Es zeigt
- Fig. 1: ein multimediales Kommunikationsendgerät in einer perspektivischen Vorderansicht,
- Fig. 2: das Kommunikationsendgerät aus Fig. 1 in einer teilweise geschnittenen Vorderansicht,
- Fig. 3: das Kommunikationsendgerät aus Fig. 1 als Auftischgerät in Seitenansicht,
- Fig. 4: das Kommunikationsendgerät aus Fig. 1 als Wandgerät in Seitenansicht.

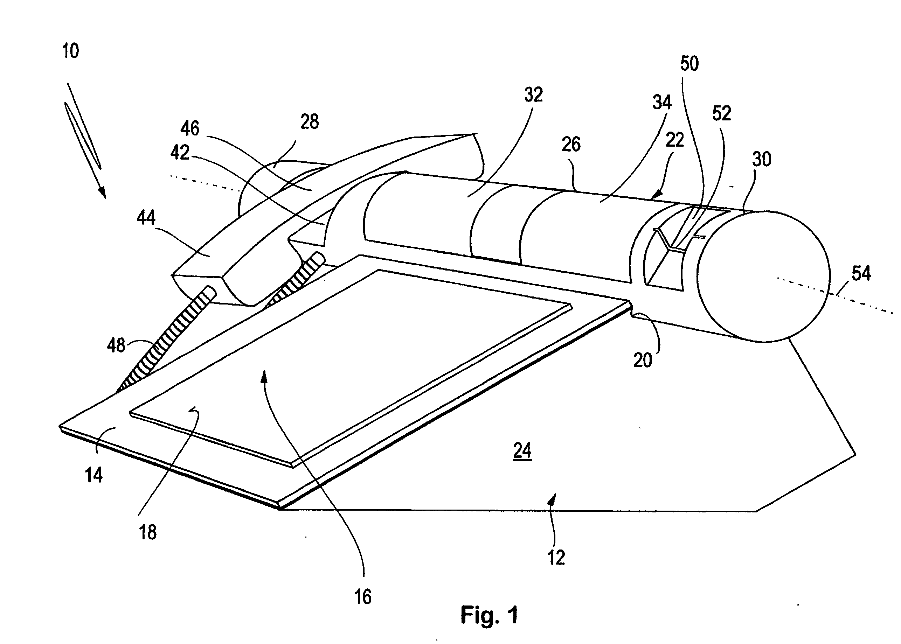

In Fig. 1 ist ein multimediales Kommunikationsendgerät 10 mit einem im Seitenprofil im wesentlichen dreieckigen Gehäuse 12 in einer perspektivischen Vorderansicht dargestellt. In eine vordere pultartig nach hinten ansteigende Frontplatte 14 des Gehäuses 12 ist ein Sichtgerät 16 eingebaut, dessen Bildschirmfläche 18 als sog. Touch Screen ausgebildet ist. Bei der Firstkante des dreieckigen Gehäuses 12 ist eine im Querschnitt kreisabschnittförmige Hohlkehle 20 in die Frontplatte 14 eingeformt, in der ein zylindrischer Körper 22 drehbar gelagert ist.

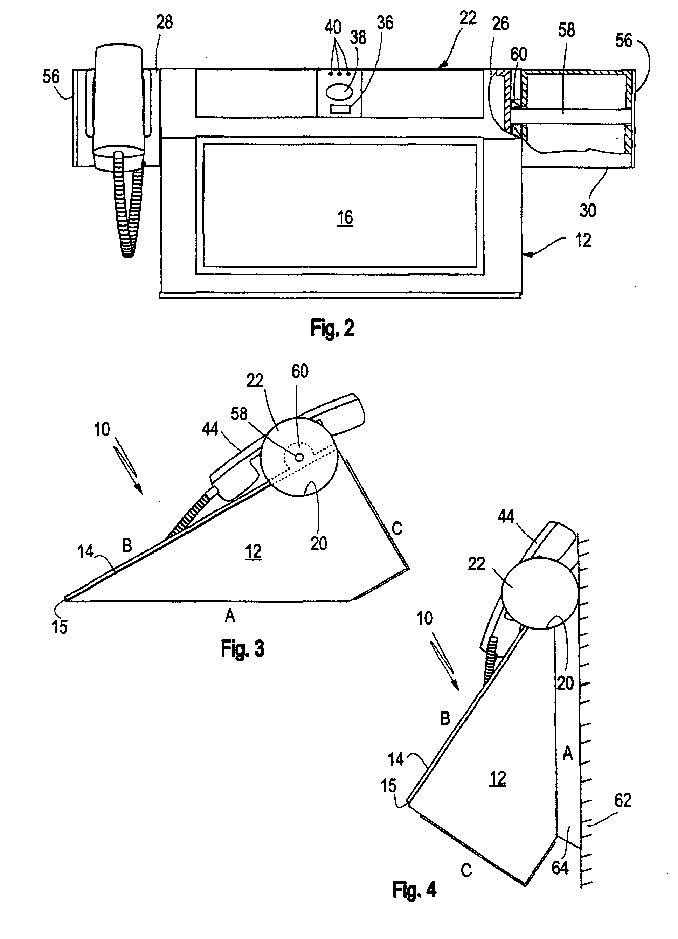

Der zylindrische Körper 22 steht zu beiden Seiten über die Seitenwände 24 über (in Fig. 1 ist nur die rechte Seitenwand zu sehen). Der zylindrische Körper 22 besteht aus drei Teilen: Einem mittleren Teilkörper 26, einem linken Überstand 28 und einem rechten Überstand 30. In den mittleren Teilkörper 26 ist ein linker und ein rechter Lautsprecher 32, 34 eingebaut. Zwischen beiden ist über den Umfang des zylindrischen Körpers 22 verteilt ein Mikrofon 36, eine Videokamera 38 und eine Statusanzeige 40 angeordnet (Fig. 2).

In den linken Überstand 28 ist eine muldenförmige Ablage 42 für einen Handapparat 44 eingeformt, die dem Griffteil 46 des Handapparates 44 als Auflage dient. Die Anschlußleitung 48 des Handapparates 44 tritt unterhalb der Ablage 42 aus dem linken Überstand 28 aus. In die Ablage 42 ragt in bekannter und deshalb nicht dargestellter Weise ein Betätigungsglied eines ebenfalls bekannten Gabelumschalters hinein.

In den rechten Überstand 30 ist eine Griffmulde 50 eingeformt, in deren Mitte ein Kartenschlitz 52 eines ansonsten nicht dargestellten Telefonkartenlesers eingelassen ist. Der Kartenschlitz 52 verläuft parallel zur Längsachse 54 des zylindrischen Körpers 22.

Fig. 2 zeigt das multimediale Kommunikationsendgerät 10 in einer teilweise geschnittenen Vorderansicht. Darin ist zu erkennen, daß der mittlere Teilkörper 26, der linke Überstand 28 und der rechte Überstand 30 des zylindrischen Körpers 22 von einander getrennte, koaxial zueinander ausgerichtete Teilzylinder sind.

An den freien Stirnseiten des linken und des rechten Überstandes 28, 30 ist jeweils ein Handrad 56 angeordnet, welches über eine den jeweiligen Überstand 28, 30 durchsetzende Welle 58 mit dem mittleren Teilkörper 26 drehverbunden ist. Die Welle 58 ist in Lagerböcken 60 gelagert, die rechts und links an die Frontplatte 14 angeformt sind (in den Figuren 2 und 3 ist jeweils nur der rechte Lagerbock sichtbar). Durch Drehung eines der Handräder 56 ist der mittlere Teilkörper 26 relativ zum linken Überstand 28, zum rechten Überstand 30 und zum Gehäuse 12 drehbar. Dadurch ist es jedem Benutzer möglich, den Neigungswinkel der optischen Achse der Videokamera 38 und damit deren höhenrichtige Einstellung relativ zu seiner Körpergröße einzustellen. Wird auf den rechten Überstand 30 verzichtet, z.B. weil für den beabsichtigten Einsatzfall des Kommunikationsendgerätes 10 kein Kartenleser erforderlich ist, wird das Handrad 56 direkt an den mittleren Teilkörper 26 angesetzt.

Fig. 3 zeigt das multimediale Kommunikationsendgerät 10 als Stand- oder Auftischgerät in Seitenansicht. Die wesentlichen Flächen des Gehäuses 12 sind mit A, B und C bezeichnet. Die Fläche A dient in der Auftisch-Version des Kommunikationsendgerätes 10 als Standfläche, während die Fläche B die Frontplatte 14 mit dem Sichtgerät 16 trägt. Über letzterem ist die Hohlkehle 20 in die Frontplatte 14 eingeformt; die Unterkante 15 der Frontplatte 14 liegt damit bei der von den Flächen A und B gebildeten Gehäusekante.

Fig. 4 zeigt dasselbe Kommunikationsendgerät 10 als Wandgerät in Seitenansicht. Die wesentlichen Flächen des Gehäuses 12 sind wie in Fig. 3 mit A, B und C bezeichnet. Es ist aber zu erkennen, daß das Gehäuse 12 so herumgedreht ist, daß die Fläche A nun der Wandbefestigung dient, während die Fläche B nach wie vor die Frontplatte 14 mit dem Sichtgerät 16 trägt. Die Frontplatte 14 ist aber relativ zum Gehäuse 12 um 180° gedreht, so daß ihre Unterkante 15 nun bei der von den Flächen B und C gebildeten Gehäusekante liegt. Die Hohlkehle 20 dient nach wie vor der Aufnahme des zylindrischen Körpers 22. Da der zylindrische Körper 22 bei Wandbefestigung des Kommunikationsendgerätes 10 nach hinten über die Fläche B hinausragt, ist zwischen dem Gehäuse 12 und der das Kommunikationsendgerät 10 tragenden Wand 62 ein Wandkasten 64 angeordnet, der zugleich der Aufnahme der zu dem Kommunikationsendgerät 10 führenden elektrischen Leitungen dient.

An den Figuren 3 und 4 ist zu erkennen, daß die Ablage 42 für den Handapparat 44 und der Kartenleser entsprechend den ergonomischen Anforderungen bei einer Tischaufstellung oder Wandbefestigung des Kommunikationsendgerätes 10 unterschiedlich eingestellt sein müssen. Dies muß nur einmal bei der Festlegung auf die Stand- bzw. die Wand-Version geschehen. Deshalb ist der linke und der rechte Überstand 28, 30 relativ zum Gehäuse 12 und dem mittleren Teilkörper 26 drehbar und in der eingestellten Position derart fixierbar, daß er aus der einmal eingestellten Position von außerhalb des Gehäuses 12 nicht verstellbar ist.

## Patentansprüche

1. Multimediales Kommunikationsendgerät (10), umfassend ein pultartiges Gehäuse (12), ein in eine vordere Fläche (B) des Gehäuses (12) eingebautes Sichtgerät (16), eine Videokamera (38) und einen Fernsprech-Handapparat (44),
**dadurch gekennzeichnet,**
**daß** in das Kommunikationsendgerät (10) oberhalb des Sichtgerätes (16) eine parallel zu einer Oberkante des Gehäuses (12) verlaufende Hohlkehle (20) für die Aufnahme wenigstens eines vollzylindrischen oder zumindest im Bereich der Hohlkehle (20) teilzylindrischen Körpers (22) eingeformt ist,
**daß** der voll- oder teilzylindrische Körper (22) um seine mit der Längsachse der Hohlkehle (20) zusammenfallende Längsachse (54) drehbar in der Hohlkehle (20) gelagert ist und daß in den voll- oder teilzylindrischen Körper (22) die Videokamera (38) eingebaut, an den volloder teilzylindrischen Körper (22) eine Ablage (42) für den Fernsprech-Handapparat (44) angeformt ist und/oder zusätzlich ein Kartenleser für Chip- oder Magnetstreifenkarten in den voll- oder teilzylindrischen Körper (22) eingebaut ist.

2. Anordnung nach Anspruch 1, **dadurch gekennzeichnet, daß** der voll- oder teilzylindrische Körper (22) auf einer Seite über das Gehäuse (12) übersteht und daß in den Überstand (30) der Kartenleser eingebaut und/oder an den Überstand (28) die Ablage (42) angeformt ist.

3. Anordnung nach Anspruch 1, **dadurch gekennzeichnet, daß** der voll- oder teilzylindrische Körper (22) auf beiden Seiten über das Gehäuse (12) übersteht und daß in den einen Überstand (30) der Kartenleser eingebaut und an den anderen Überstand (28) die Ablage (42) angeformt ist.

4. Anordnung nach einem der vorhergehenden Ansprüche, **dadurch gekennzeichnet, daß** in einen mittleren Teilkörper (26) des voll- oder teilzylindrischen Körpers (22) wenigstens ein Lautsprecher (32, 34), ein Mikrofon (36), die Videokamera (38) und eine Anzeigeeinrichtung (40) für den Status des Kommunikationsendgerätes (10) eingebaut ist.

5. Anordnung nach Anspruch 4, **dadurch gekennzeichnet, daß** in einen mittleren Teilkörper (26) des voll- oder teilzylindrischen Körpers (22) zwei die Basis eines Stereowiedergabesystems bildende Lautsprecher (32, 34) eingebaut sind und daß wenigstens die Videokamera (38) zwischen diesen angeordnet ist.

6. Anordnung nach einem der vorhergehenden Ansprüche, **dadurch gekennzeichnet, daß** der voll- oder teilzylindrische Körper (22) in wenigstens zwei axial nebeneinander angeordnete Teilkörper (26, 28; 26, 30) unterteilt ist, die unabhängig voneinander um eine ihnen gemeinsame Längsachse (54) drehbar sind.

7. Anordnung nach Anspruch 6, **dadurch gekennzeichnet, daß** der voll- oder teilzylindrische Körper (22) in einen mittleren Teilkörper (26), einen linken Überstand (28) und einen rechten Überstand (30) unterteilt ist.

8. Anordnung nach Anspruch 7, **dadurch gekennzeichnet, daß** an wenigstens einer Stirnseite des voll- oder teilzylindrischen Körpers (22) ein Handrad (56) angeordnet ist, welches mit dem mittleren Teilkörper (26) derart verbunden ist, daß durch Drehung des Handrades (56) der mittlere Teilkörper (26) relativ zum linken Überstand (28), zum rechten Überstand (30) und zum Gehäuse (12) drehbar ist.

9. Anordnung nach Anspruch 8, **dadurch gekennzeichnet, daß** der linke und/oder der rechte Überstand (28, 30) relativ zum Gehäuse (12) und dem mittleren Teilkörper (26) drehbar ist und in der eingestellten Position derart fixierbar ist, daß er aus dieser von außerhalb des Gehäuses (12) nicht verstellbar ist.

10. Anordnung nach den vorhergehenden Ansprüchen, **dadurch gekennzeichnet, daß** das Sichtgerät (16) in eine die vordere Fläche (B) bildende Frontplatte (14) eingebaut ist und daß eine mit dem mittleren Teilkörper (26) des voll- oder teilzylindrischen Körpers (22) verbundene, in der Längsachse (54) angeordnete Welle (58) in wenigstens einem an der Frontplatte (14) angeformten Lagerbock (60) drehbar gelagert ist.

11. Anordnung nach einem der vorhergehenden Ansprüche, **dadurch gekennzeichnet, daß** das Gehäuse (12) Mittel zur verwendung als Standgehäuse oder als Wandgehäuse aufwasst, wobei in beiden Fällen die vordere Fläche (B) die Frontplatte (14) trägt und eine andere, zweite Fläche (A) als Aufstell- bzw. Wandbefestigungsfläche dient.

## Claims

1. Multimedia communications terminal (10), comprising a console-like housing (12), a visual display unit (16) which is arranged installed in a front surface (B) of the housing (12), a video camera (38) and a telephone handset (44),
**characterized**
**in that** a channel (20), which runs parallel to an upper of the housing (12), for accommodating at least one fully cylindrical body (22) or body (22) which is partially cylindrical at least in the area of the channel (20), is formed above the visual display unit (16) in the communications terminal (10),
**in that** the fully or partially cylindrical body (22) is mounted in the channel (20) such that it can be rotated about its longitudinal axis (54), which coincides with the longitudinal axis of the channel (20), and in that the video camera (38) is installed in the fully or partially cylindrical body (22), a rest (42) for the telephone handset (44) is integrally formed on the fully or partially cylindrical body (22) or, in addition, a card reader for smart cards or magnetic strip cards is installed in the fully or partially cylindrical body (22).

2. Arrangement according to Claim 1, **characterized in that** the fully or partially cylindrical body (22) projects beyond the housing (12) on one side, and **in that** the card reader is installed in the projection (30), and/or the rest (42) is integrally formed on the projection (28).

3. Arrangement according to Claim 1, **characterized in that** the fully or partially cylindrical body (22) projects beyond the housing (12) on both sides, and **in that** the card reader is installed in one projection (30), and the rest (42) is integrally formed on the other projection (28).

4. Arrangement according to one of the preceding claims, **characterized in that** at least one loudspeaker (32, 34), a microphone (36), the video camera (38) and an indicating device (40) for the status of the communications terminal (10) are installed in a central body element (26) of the fully or partially cylindrical body (22).

5. Arrangement according to Claim 4, **characterized in that** two loudspeakers (32, 34), which form the basis of a stereo reproduction system, are installed in a central body element (26) of the fully or partially cylindrical body (22), and **in that** at least the video camera (38) is arranged between them.

6. Arrangement according to one of the preceding claims, **characterized in that** the fully or partially cylindrical body (22) is subdivided into at least two body elements (26, 28; 26, 30) which are arranged axially alongside one another and can be rotated independently of one another about a longitudinal axis (54) which they share.

7. Arrangement according to Claim 6, **characterized in that** the fully or partially cylindrical body (22) is subdivided into a central body element (26), a left-hand projection (28) and a right-hand projection (30).

8. Arrangement according to Claim 7, **characterized in that** a handwheel (56) is arranged at at least one end of the fully or partially cylindrical body (22) and is connected to the central body element (26) in such a manner that rotation of the handwheel (56) allows the central body element (26) to be rotated relative to the left-hand projection (28), relative to the right-hand projection (30), and relative to the housing (12).

9. Arrangement according to Claim 8, **characterized in that** the left-hand and/or right-hand projection (28, 30) can be rotated relative to the housing (12) and relative to the central body element (26), and can be fixed in the set position in such a manner that it cannot be moved from this position from outside the housing (12).

10. The arrangement according to the preceding claims, **characterized in that** the visual display unit (16) is installed in a front panel (14) forming the front surface (B), and **in that** a shaft (58) which is connected to the central body element (26) of the fully or partially cylindrical body (22) and is arranged in the longitudinal axis (54) is mounted in at least one bearing block (60) which is integrally formed on the front panel (14), such that it can rotate.

11. Arrangement according to one of the preceding claims, **characterized in that** the housing (12) has means for use as a free-standing housing or as a wall-mounted housing, with, in both cases, the front surface (B) being fitted with the front panel (14) and another, second surface (A) being used as a mounting surface or as a wall-mounting surface.

## Revendications

1. Appareil de communication multimédia (10) comportant un boîtier (12) de type pupitre, un dispositif de visualisation (16) monté dans une face avant du boîtier (12), une caméra vidéo (38) et un combiné téléphonique (44), **caractérisé en ce que**
- dans l'appareil de communication (10), au-dessus du dispositif de visualisation (16), est ménagée une gorge (20) s'étendant parallèlement au bord supérieur du boîtier (12) et destinée à recevoir au moins un corps (22) totalement cylindrique ou au moins partiellement cylindrique dans la région de la gorge (20)
- le corps (22) totalement ou partiellement cylindrique est monté dans la gorge (20) de façon à pouvoir tourner autour de son axe longitudinal (54) coïncidant avec l'axe longitudinal de la gorge (20) et **en ce que**
- la caméra vidéo (38) est montée dans le corps (22) totalement ou partiellement cylindrique, un logement (42) destiné au combiné téléphonique est ménagé dans le corps (22) totalement ou partiellement cylindrique et/ou en plus un lecteur de carte destiné à des cartes à puce ou à bande magnétique est intégré dans le corps (22) totalement ou partiellement cylindrique.

2. Appareil selon la revendication 1, **caractérisé en ce que** le corps (22) totalement ou partiellement cylindrique fait saillie d'un côté du boîtier (22), et **en ce que** le lecteur de carte est monté dans la partie saillante (30) et/ou le logement (42) est ménagé dans la partie saillante (28).

3. Appareil selon la revendication 1, **caractérisé en ce que** le corps (22) totalement ou partiellement cylindrique fait saillie des deux côté du boîtier (12), et **en ce que** le lecteur de carte est monté dans l'une (30) des parties saillantes et le logement (42) est ménagé dans l'autre (28) des parties saillantes.

4. Appareil selon l'une des revendications précédentes, **caractérisé en ce que** au moins un haut-parleur (32, 34), un microphone (36), la caméra vidéo (38) et un dispositif (40) d'indication de l'état de l'appareil de communication sont intégrés dans une partie médiane (26) du corps totalement ou partiellement cylindrique (22).

5. Appareil selon la revendication 4, **caractérisé en ce que** deux haut-parleurs (32, 34) formant la base d'un système de retransmission stéréophonique sont intégrés dans une partie médiane (26) du corps totalement ou partiellement cylindrique (22) et **en ce que** la caméra vidéo (38) est interposée entre ces haut-parleurs.

6. Appareil selon l'une des revendications précédentes, **caractérisé en ce que** le corps (22) totalement ou partiellement cylindrique est subdivisé en au moins deux parties (26, 28 ; 26, 30), axialement côte à côte, qui peuvent tourner indépendamment l'une de l'autre autour d'un axe longitudinal (54) commun.

7. Appareil selon la revendication 6, **caractérisé en ce que** le corps (22) totalement ou partiellement cylindrique est subdivisé en une partie médiane (26), une partie saillante gauche (28) et une partie saillante droite (30).

8. Appareil selon la revendication 7, **caractérisé en ce qu'**une roue à main (56) est disposée au moins d'un côté du corps (22) totalement ou partiellement cylindrique, laquelle roue à main est reliée à la partie médiane (26) de sorte que en tournant la roue à main (56) la partie médiane (26) peut tourner par rapport à la partie saillante gauche (28), la partie saillante droite (30) et le boîtier (12).

9. Appareil selon la revendication 8, **caractérisé en ce que** la partie saillante gauche et/ou droite (28, 30) peut tourner par rapport au boîtier (12) et à la partie médiane (26) et peut être immobilisée dans la position réglée de sorte qu'elle ne puisse pas être déréglée de l'extérieur du boîtier (12).

10. Appareil selon les revendications précédentes, **caractérisé en ce que** le dispositif de visualisation (16) est intégré dans une plaque frontale (14) formant la face avant (B) et **en ce qu'**un arbre (58), monté dans l'axe longitudinal (54) et relié à la partie médiane (26) du corps (22) totalement ou partiellement cylindrique, est monté à rotation dans au moins un bloc de palier (60) formé sur la plaque frontale (14).

11. Appareil selon l'une des revendications précédentes, **caractérisé en ce que** le boîtier (12) comporte un moyen pour l'utilisation comme appareil de bureau ou comme appareil mural, dans les deux cas la face avant (B) supportant la plaque frontale (14) et une autre seconde face (A) servant de face de support ou de fixation murale.
